# DEMANDE DE BREVET EUROPEEN

(11) **EP 1 167 438 A1**
(43) Date de publication de la demande: **02.01.2002**
(21) Numéro de dépôt: 00113862.7
(22) Date de dépôt: 30.06.2000
(51) Int. Cl.: C08L 23/28, C08L 23/04, C08L 23/10, C08K 3/22, C08K 5/56

(54) **Polyolefine ignifuge**

(71) Demandeur: NMC S.A., B-4731 Eynatten/Raeren (BE)
(72) Inventeur: Mayerers, Jean-Pierre, 4700 Eupen (BE); Paquay, Véronique, 4890 Timister (BE)
(74) Mandataire: Kihn, Pierre Emile Joseph

(57) **Abrégé**

Polyoléfine ignifuge comprenant entre 5 et 90% de polyéthylène chloré, procédé pour leur préparation, leur utilisation pour la fabrication de mousses ou de produits thermoformés, mousses et produits thermoformés obtenus et l'utilisation des mousses obtenues.

## Description

La présente invention concerne une polyoléfine ignifuge un procédé pour leur préparation, leur utilisation pour la fabrication de mousses ou de produits thermoformés, mousses et produits thermoformés obtenus et l'utilisation des mousses obtenues.

Il est connu d'ajouter des agents ignifuges à des polyoléfines afin d'augmenter leur résistance au feu. Les additifs classiquement utilisés sont p.ex. la trioxide d'antimoine, le sulfate d'ammonium et le borax ainsi que les hydroxydes métalliques. Le dosage de ces produits, nécessaires à l'obtention d'une résistance au feu acceptable, affecte en général les propriétés mécaniques du produit fini. En plus, vu leur concentration élevée, ces additifs ignifuges risquent de migrer vers la surface du produit. Leur distribution homogène à l'intérieur du produit n'est donc plus assurée.

L'objet de la présente invention est de proposer une polyoléfine ne présentant pas ou dans une moindre mesure ces inconvénients.

L'invention a également pour objet l'utilisation de ces compositions pour la fabrication de mousses ou de produits thermoformés ainsi que les mousses et produits thermoformés obtenus et l'utilisation des mousses obtenues pour fabriquer des gaines isolantes.

Conformément à l'invention, cet objectif est atteint par une composition de polyoléfine comprenant entre 5 et 90% en poids de polyéthylène chloré.

Un des avantages d'une telle polyoléfine est qu'elle présente des qualités ignifuges acceptables sans risques de migration des additifs ignifuges.

L'absence d'additifs ignifuges classiques a en plus un effet bénéfique sur les propriétés mécaniques de la polyoléfine. En particulier, l'incorporation de polyéthylène chloré augmente la flexibilité des compositions de polyoléfine.

Les compositions selon l'invention se caractérisent habituellement par une teneur en polyéthylène chloré supérieure ou égale à 5%, de préférence supérieure ou égale à 15%, de manière particulièrement préférée supérieure ou égale à 30%.

Les compositions selon l'invention se caractérisent habituellement par une teneur en polyéthylène chloré inférieure ou égale à 90% de préférence inférieure ou égale à 75% de manière particulièrement préférée inférieure ou égale à 60%.

La polyoléfine est choisie, de préférence, parmi le groupe constitué de polyéthylène et de propylène, leurs copolymères et des mélanges de ces produits.

Avantageusement, la composition de polyoléfines comprend en outre entre 2% et 15% de métallocène.

Les compositions selon l'invention se caractérisent habituellement par une teneur en métallocène supérieure ou égale à 2%, de préférence supérieure ou égale à 5%, de manière particulièrement préférée supérieure ou égale à 7%.

Les compositions selon l'invention se caractérisent habituellement par une teneur en métallocène inférieure ou égale à 15% de préférence inférieure ou égale à 12% de manière particulièrement préférée inférieure ou égale à 10%.

La composition de polyoléfine selon l'invention peut soit être réticulée ou non réticulée. Suivant un mode de réalisation particulier, la composition de polyoléfine ignifuge est non réticulée ce qui présente l'avantage que le produit est recyclable.

Avantageusement, la composition de polyoléfine ignifuge comprend en outre du trioxide d'antimoine ou un autre additif ignifuge classique. Vu que les compositions de polyoléfine selon la présente invention, présentent des propriétés ignifuges intrinsèques, la quantité d'additifs ignifuges traditionnels nécessaires est faible. Les propriétés mécaniques ne sont pas ou peu affectés. De plus, le risque de migration de ces additifs est minimisé.

Selon un autre aspect, l'invention concerne des produits thermoformés comprenant la composition de polyoléfine ignifuge susmentionnée.

Selon encore un autre aspect, l'invention concerne une mousse comprenant la composition de polyoléfine ignifuge susmentionnée.

La mousse comporte, de préférence, essentiellement des cellules fermées.

De telles mousses ont l'avantage d'être plus flexibles que les mousses traditionnelles en polyoléfines.

De plus, elles ne présentent aucune odeur particulière.

Un usage particulièrement intéressant de cette polyoléfine ignifuge est l'usage en tant que matériau isolant et/ou en tant que profilé. Lorsque ces mousses sont utilisées en tant que gaines isolantes pour des tuyaux d'eau chaude, par exemple, il est possible de former des coudes de 90° sans pour autant devoir couper la gaine. Les gaines classiques en mousse de polyéthylène sont plus rigides et doivent être découpées pour former des angles de 90°. Les gaines selon l'invention sont donc plus faciles et plus rapides à mettre en place sur chantier.

Suivant un autre aspect de la présente invention, on propose également un procédé de fabrication d'une polyoléfine ignifuge dans lequel la polyoléfine est mélangée à chaud avec du polyéthylène chloré ainsi qu'avec éventuellement des adjuvants et additifs usuels et puis extrudée. Parmi ces additifs, citons les additifs antistatiques, anti-UV, les antioxydants, les pigments, les stabilisateurs volumiques et les agents de nucléation.

Selon un mode de réalisation préféré, le mélange d'une polyoléfine à chaud avec du polyéthylène chloré se fait dans une extrudeuse ; on ajoute un agent de moussage et on extrude le mélange ainsi obtenu afin d'obtenir une mousse.

Le choix de l'agent de moussage n'est pas critique. En principe, tous les agents de moussage utilisés traditionnellement pour le moussage de polyoléfines peuvent également l'être dans le cadre de la présente invention. Avantageusement, on utilise de l'isobutane seul ou en mélange avec un autre agent de moussage.

Les équipements utilisés pour la fabrication de mousses de polyoléfines ordinaires peuvent être utilisés dans la fabrication de mousses de polyoléfines ignifuges.

Par la suite, un mode de réalisation avantageux de l'invention est décrit à titre d'exemple.

### Exemple 1

Le polyéthylène chloré utilisé dans le cadre de la présente invention est fabriqué par Du Pont Dow et est commercialisé sous la dénomination TYRIN 3652P.

Pour la fabrication de mousses et afin d'obtenir une mousse stable de qualité acceptable, il est préférable que le polyéthylène chloré ne contienne que peu d'agents anti-bloquant.

Des concentrations trop élevées en ces agents anti-bloquant rendent la fabrication de mousses d'une qualité acceptable difficile. En particulier, il s'est avéré avantageux que le polyéthylène chloré ne contient que peu ou pas de stéarate de calcium.

Une concentration de 6% de talc et de 3 % de carbonate de calcium permettait d'obtenir des mousses de bonne qualité.

Une mousse à cellules fermées a été obtenue à partir de :
45.5% (en poids) de polyéthylène chloré décrit plus haut,
35.5 % (en poids) de polyéthylène
8.9% (en poids) de métallocène,
6.2% (en poids) de trioxide d'antimoine,
2.2 % (en poids) de stéramide,
1.65% (en poids) d'huile de soja.

L'agent de moussage employé était de l'isobutane.

Des tubes en mousse d'une densité de 30kg/m³ ont été soumis à un test pour déterminer la force de flexion maximale pour obtenir 50 mm de flexion.

La force de flexion maximale était de +/- 44 N pour un échantillon de la mousse sus mentionnée tandis qu'un échantillon de mousse traditionnel en LDPE nécessitait une force de flexion maximale de +/- 102 N. Les échantillons présentaient le même diamètre intérieur et extérieur ainsi que la même densité.

Diverses autres formulations ont été testées et ont permis d'obtenir des mousses de densités variées. Ces mousses présentent, en plus de leur bonne flexibilité, une résistance au feu accrue par rapport à des mousses ne comprenant pas de polyéthylène chloré :

### Exemple 2

20 parties de LDPE
80 parties de polyéthylène chloré (Du Pont Dow Tyrin)
2 parties de surfactant
2 parties de colorants

### Exemple 3

30 parties de LDPE
70 parties de polyéthylène chloré (Du Pont Dow Tyrin)
2 parties de surfactant
2 parties de colorants

### Exemple 4

40 parties de LDPE
60 parties de polyéthylène chloré (Du Pont Dow Tyrin)
4.8 parties d'antioxydant
2 parties de surfactant
2 parties de colorants

### Exemple 5

50 parties de LDPE
50 parties de polyéthylène chloré (PCE 140B de Tianteng Chemical Co.)
7.5 parties de surfactant
3 parties de colorants

### Exemple 6

60 parties de LDPE
40 parties de polyéthylène chloré (Hoechst Pe-c 4135h)
2 parties de surfactant
2 parties de colorants

## Revendications

1. Composition de polyoléfine ignifuge comprenant entre 5% et 90% de polyéthylène chloré.

2. Composition de polyoléfine ignifuge selon la revendication 1, **caractérisée en ce que** la polyoléfine est choisie parmi le groupe constitué de polyéthylène et de propylène, leurs copolymères et des mélanges de ces produits.

3. Composition de polyoléfine ignifuge selon la revendication 1 ou 2, **caractérisée en ce qu'**elle comprend en outre entre 2% et 15% de métallocène.

4. Composition de polyoléfine ignifuge selon l'une quelconque des revendications précédentes, **caractérisée en ce que** la polyoléfine est non réticulée.

5. Composition de polyoléfine ignifuge selon l'une quelconque des revendications précédentes, **caractérisée en ce que** la polyoléfine est réticulée.

6. Composition de polyoléfine ignifuge selon l'une quelconque des revendications précédentes, **caractérisée en ce qu'**elle comprend en outre du trioxide d'antimoine.

7. Produit thermoformé comprenant une composition de polyoléfine ignifuge selon l'une quelconque des revendications précédentes.

8. Mousse comprenant une composition de polyoléfine ignifuge selon l'une quelconque des revendications 1 à 6.

9. Mousse selon la revendication 8, **caractérisé en ce qu'**elle comporte essentiellement des cellules fermées.

10. Utilisation de la mousse selon la revendication 8 ou 9 pour la fabrication de gaines isolantes.

11. Procédé de fabrication d'une composition de polyoléfine ignifuge selon l'une quelconque des revendications 1 à 6, **caractérisé en ce que** la polyoléfine est mélangée à chaud avec du polyéthylène chloré et puis extrudé.

12. Procédé selon la revendication 11, **caractérisé en ce qu'**on ajoute un agent de moussage dans l'extrudeuse et **en ce qu'**on extrude le mélange ainsi obtenu afin d'obtenir une mousse.
